# EUROPÄISCHE PATENTSCHRIFT

(11) **EP 2 354 051 B1**
(45) Veröffentlichungstag und Bekanntmachung des Hinweises auf die Patenterteilung: **30.07.2014**
(21) Anmeldenummer: 11450011.9
(22) Anmeldetag: 27.01.2011
(51) Int. Cl.: B65G 41/00, B66F 7/02

(54) **Fördervorrichtung**
Conveying device
Dispositif convoyeur

(30) Priorität: 29.01.2010 AT 1202010
(43) Veröffentlichungstag der Anmeldung: 10.08.2011
(73) Patentinhaber: motion06 engineering gmbh, 5202 Neumarkt am Wallersee (AT)
(72) Erfinder: Brunninger, Markus, 5204 Seewalchen (AT)
(74) Vertreter: Hübscher, Helmut

(56) Entgegenhaltungen:
- DE-B1- 1 048 231
- DE-C- 126 582
- FR-A- 799 057
- US-A- 2 814 889
- US-A- 3 471 001

## Beschreibung

Die Erfindung bezieht sich auf eine Fördervorrichtung mit einem Umlaufförderer, der ein Traggestell mit zwei Umlenkrollen aufweist, und mit einem Schwenktrieb für das Traggestell zur Schwenkverstellung des Umlaufförderers zwischen wenigstens zwei Schwenkstellungen.

Um beispielsweise Gepäckstücke, aber auch andere Fördergüter nach einer Kontrolle ausscheiden zu können, sind im Zuge der Förderstrecke Weichen vorgesehen. Unter anderem sind einfach aufgebauten Weichen bekannt, die einen um die zulaufseitige Umlenkrolle verschwenkbar in einem Gerüst gelagerten Umlaufförderer aufweisen, der mittels eines Schwenktriebs zwischen zwei Schwenkstellungen verlagert werden kann, um die diesem Umlaufförderer aufgegebenen Gepäckstücke je nach der Schwenkstellung des Umlaufförderers an einen von zwei übereinander angeordneten, weiterführenden Förderern zu übergeben. Um den Anforderungen für solche verschwenkbare Umlaufförderer zu genügen, wurde das Traggestell über einen Schlitten in Förderrichtung verschiebbar in einer Hubeinrichtung abgestützt, sodass bei einer Höhenverlagerung der beim Verschwenken des Umlaufförderers erforderliche Längenausgleich über die Schlittenbewegung berücksichtigt werden kann (z.B. WO 99/12834). Nachteilig bei diesem bekannten Schwenktrieb ist allerdings der vergleichsweise hohe Konstruktionsaufwand und die durch diesen Konstruktionsaufwand bedingte Masse, die bei einer Schwenkverstellung beschleunigt und wieder abgebremst werden muss, was wiederum aufwendige Antriebe nach sich zieht, um kurze Schaltzeiten für mit solchen Umlaufförderern versehene Förderweichen erreichen zu können.

Darüber hinaus ist ein Anbauförderer für eine Planierfräse bekannt (US 2 814 889 A), wobei der Förderer in einem fahrbaren Gestell gelagert ist und über Zugmitteltriebe an den beiden Enden in beliebigen Neigungslagen festgehalten werden kann. Nachteilig bei dieser bekannten Neigungseinstellung für einen Umlaufförderer ist neben der vergleichsweise aufwendigen Zugmittelführung der Umstand, dass zwei voneinander unabhängige Zugmitteltriebe für die beiden Enden des Förderers erforderlich sind. Das Absenken des Förderers erfolgt gewichtsbedingt, was für an eine Planierfräse angebaute Förderer keine Rolle spielt, wohl aber für Förderer, die dazu dienen, Gepäckstücke nach einer Kontrolle auszuscheiden, weil für solche Einsatzzwecke hohe Durchsatzmengen verlangt werden.

Der Erfindung liegt somit die Aufgabe zugrunde, eine Fördervorrichtung der eingangs geschilderten Art so auszugestalten, dass ein rasches Umschwenken des Umlaufförderers zwischen den Schwenklagen mit einem vergleichsweise geringen Konstruktionsaufwand gewährleistet werden kann.

Die Erfindung löst die gestellte Aufgabe mit den Merkmalen des Anspruchs 1.

Durch das Vorsehen eines im Gerüst angeordneten Zugmitteltriebs zur Schwenkverstellung des um eine der beiden Umlenkrollen schwenkbar gelagerten Umlaufförderers können in vorteilhafter Weise konstruktive Maßnahmen entfallen, um den sonst bei einer Linearführung des Schwenktriebs erforderlichen Längenausgleich während der Schwenkbewegung des Umlenkförderers zu ermöglichen. Der am Traggestell angreifende Zugmitteltrieb erlaubt nämlich eine entsprechende Zugmittelauslenkung für einen solchen Längenausgleich. Damit werden nicht nur einfache Konstruktionsbedingungen sichergestellt, sondern auch die beim Verschwenken zu bewegenden Massen deutlich verringert, was sich vorteilhaft auf den Antrieb auswirkt.

Mit den seitlich am Traggestell des Umlaufförderers angreifenden Zugmitteln, die über eine obere und eine untere Umlenkrolle geführt und deren Enden miteinander zu einer Schlinge verbunden sind, können nicht nur nach oben, sondern auch nach unten wirkende Stellkräfte über den Zugmitteltrieb auf den Umlaufförderer ausgeübt werden. Die zusätzlich zur Gewichtsbelastung wirksamen Stellkräfte ermöglichen somit eine beschleunigte Verlagerung des Umlaufförderers von einer oberen in eine untere Schwenkstellung. Ein in einer geschlossenen Schlinge über obere und untere Umlenkrollen geführtes Zugmittel kann allerdings nicht frei in einer zur Schwenkachse des Umlenkförderers radialen Richtung ausgelenkt werden. Die Eigenelastizität der Zugmittel reicht jedoch bei einer entsprechenden Länge der Zugmittelschlinge für einen Längenausgleich aus, insbesondere dann, wenn die Umlenkrollen des Zugmitteltriebs in einer mittleren Schwenkstellung des Umlaufförderers in einer zum Umlaufförderer zumindest angenähert senkrechten Ebene liegen, weil in diesem Fall die den Längenausgleich bedingende Bogenhöhe der Bahn der Zugmittelanlenkung am Traggestell des Umlaufförderers vergleichsweise gering ausfallen kann. In diesem Zusammenhang ist zu bedenken, dass aufgrund der für den Umlaufförderer vorgesehenen Förderstrecke der Schwenkwinkel zur Überbrückung des Höhenabstands der weiterführenden Förderer klein gehalten werden kann.

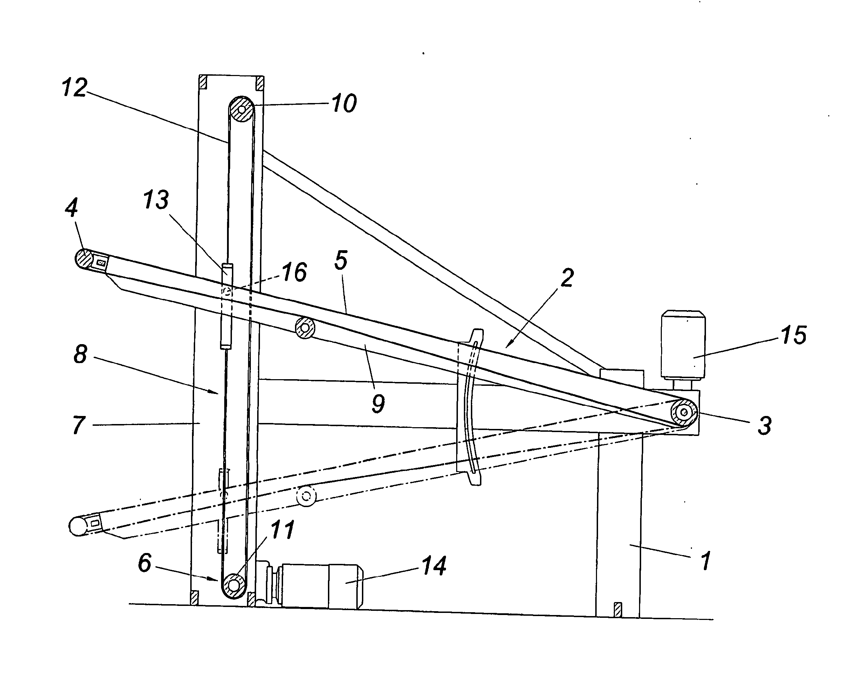

In der Zeichnung ist der Erfindungsgegenstand beispielsweise dargestellt, und zwar wird eine erfindungsgemäße Fördervorrichtung in einem schematischen Längsschnitt gezeigt.

Die dargestellte Fördervorrichtung weist ein Gerüst 1 auf, in dem ein Umlaufförderer 2, der ein endlos um eine zulaufseitige Umlenkrolle 3 und eine ablaufseitige Umlenkrolle 4 geführtes Förderband 5 umfasst, schwenkbar gelagert ist, und zwar um die Achse der zulaufseitigen Umlenkrolle 3. Zur Schwenkverstellung des Umlaufförderers 2 ist ein Schwenktrieb 6 vorgesehen, der aus einem in einem Portal 7 des Gerüsts 1 angeordneten Zugmitteltrieb 8 aufgebaut ist und zwei seitlich am Traggestell 9 des Umlaufförderers 2 angreifende, um eine obere und eine untere Umlenkrolle 10, 11 geführte Zugmittel 12 aufweist, die durch eine entsprechende Verbindung 13 ihrer beiden Enden zu einer endlosen Schlinge gefügt sind. Zum Antrieb dieses Zugmitteltriebs 8 dient ein Getriebemotor 14, der mit der unteren Umlenkrolle 11 antriebsverbunden ist, was jedoch nicht zwingend ist.

Der über einen Getriebemotor 15 antreibbare Umlaufförderer 2 kann über den Zugmitteltrieb 8 zwischen zwei Schwenkstellungen verlagert werden, von denen die obere Schwenkstellung in vollen Linien und die untere Schwenkstellung strichpunktiert eingezeichnet sind. Die Anordnung ist dabei so getroffen, dass der Zugmitteltrieb 8 in der Mittelstellung des Umlenkförderers 2 zwischen den beiden Schwenkstellungen zumindest angenähert senkrecht zum Umlaufförderer verläuft. Durch diese Maßnahme wird erreicht, dass sich beim Verschwenken des Umlaufförderers 2 zwischen den beiden Schwenkstellungen die Anlenkung 16 der Zugmittel 12 am Traggestell 9 lediglich um eine vergleichsweise kleine Strecke entsprechend der Bogenhöhe der Bogenbahn der Anlenkung 16 in horizontaler Richtung verlagert, sodass der mit dieser Verlagerung erforderliche Längenausgleich durch die Elastizität der Zugmittel 12 ohne zusätzliche konstruktive Maßnahme sichergestellt werden kann. Durch das Verschwenken des Umlaufförderers 2 zwischen den beiden Schwenkstellungen, in denen der Umlaufförderer 2 jeweils an einen von zwei übereinander angeordneten, weiterführenden Förderern anschließt, wird es in an sich bekannter Weise möglich, aus der Reihe der dem Umlaufförderer 2 aufgegebenen Gepäckstücke bestimmte Gepäckstücke auszuscheiden, wenn der Umlaufförderer 2 aus einer der Weiterförderung der Gepäckstücke dienenden, an einen der beiden Förderer anschließenden Schwenkstellung in die andere Schwenkstellung verlagert wird, um das auszuscheidende Gepäckstück dem anderen zur Weiterleitung der ausgeschiedenen Gepäckstücke dienenden Förderer zu übergeben.

Die Erfindung ist selbstverständlich nicht auf das dargestellte Ausführungsbeispiel beschränkt. So könnte eine solche Fördervorrichtung nicht nur zum Ausscheiden von Gutstücken, sondern auch zum Vereinigen zweier Fördergutlinien genützt werden. In diesem Fall ist die Förderrichtung des Umlaufförderers 2 umzukehren, sodass Gutstücke von den beiden übereinander angeordneten Förderern, zwischen denen der Umlaufförderer 2 verschwenkbar ist, vom Umlaufförderer 2 übernommen und auf ein gemeinsames Förderband übergeleitet werden können, das an die die Schwenkachse bildende Umlenkrolle 4 des Umlaufförderers 2 anschließt.

## Patentansprüche

1. Fördervorrichtung mit einem Umlaufförderer (2), der ein Traggestell (9) mit zwei Umlenkrollen (3, 4) aufweist, und mit einem Schwenktrieb (6) für das Traggestell (9) zur Schwenkverstellung des Umlaufförderers (2) zwischen wenigstens zwei Schwenkstellungen, wobei der Schwenktrieb (6) einen an dem um die Achse einer der beiden Umlenkrollen (3, 4) in einem Gerüst (1) schwenkbar gelagerten Traggestell (9) angreifenden, im Gerüst (1) gelagerten Zugmitteltrieb (8) umfasst, der seitlich am Traggestell (9) des Umlaufförderers (2) angreifende Zugmittel (12) aufweist, die über eine obere und eine untere Umlenkrolle (10, 11) geführt und deren Enden miteinander zu einer Schlinge verbunden sind.

2. Fördervorrichtung nach den Ansprüchen 1, **dadurch gekennzeichnet, dass** die Umlenkrollen (10, 11) des Zugmitteltriebs (8) in einer mittleren Schwenkstellung des Umlaufförderers (2) in einer zum Umlaufförderer (2) zumindest angenähert senkrechten Ebene liegen.

## Claims

1. Conveying device having a circulating conveyor (2), which has a support frame (9) with two deflection rollers (3, 4), and having a pivot drive (6) for the support frame (9) for pivotal adjustment of the circulating conveyor (2) between at least two pivot positions, wherein the pivot drive (6) includes a traction mechanism drive (8) mounted in a frame (1) and engaging with the support frame (9) pivotably mounted about the axis of one of the two deflection rollers (3, 4) in the frame (1), which traction mechanism drive has traction means (12) engaging laterally on the support frame (9) of the circulating conveyor (2) and being guided over an upper and a lower deflection roller (10, 11) and having their ends connected to one another to form a loop.

2. Conveying device as claimed in claim 1, **characterised in that** the deflection rollers (10, 11) of the traction mechanism drive (8) lie in a plane at least approximately perpendicular to the circulating conveyor (2) when the circulating conveyor (2) is in a middle pivot position.

## Revendications

1. Dispositif convoyeur avec un convoyeur sans fin (2) qui comprend un bâti support (9) avec deux rouleaux de guidage (3, 4) et avec un système d'entraînement (6) pour le bâti de support (9) pour le pivotement du convoyeur sans fin (2) entre au moins deux positions de pivotement, dans lequel le système d'entraînement (6) comprend un mécanisme de traction (8) disposé dans une structure (1), en prise au niveau du bâti de support (9) monté pivotant dans la structure (1), autour de l'axe d'un des deux rouleaux de guidage (3, 4) qui présente des moyens de traction (12) en prise latéralement au niveau du bâti de support (9) du convoyeur sans fin (2), lesquels sont guidés sur des poulies de renvoi inférieure et supérieure (10, 11), leurs extrémités étant reliées ensemble pour former une boucle.

2. Dispositif convoyeur selon la revendication 1, **caractérisé en ce que** les poulies de renvoi (10, 11) du mécanisme de traction (8) sont disposées, dans une position pivotante médiane du convoyeur sans fin (2), dans un plan au moins à peu près perpendiculaire au convoyeur sans fin (2).
